Europäisches Patentamt

(19) European Patent Office

Office européen des brevets

(11) Numéro de publication: **0 079 259**
**B1**

(12) # FASCICULE DE BREVET EUROPEEN

(45) Date de publication du fascicule du brevet:
**19.06.85**

(21) Numéro de dépôt: **82401908.7**

(22) Date de dépôt: **18.10.82**

(51) Int. Cl.⁴: **C 03 B 23/11**

(54) **Machine automatique pour la fabrication d'objets allongés, notamment d'ampoules pharmaceutiques, à partir de cannes de verre.**

(30) Priorité: **20.10.81 FR 8119691**

(43) Date de publication de la demande:
**18.05.83 Bulletin 83/20**

(45) Mention de la délivrance du brevet:
**19.06.85 Bulletin 85/25**

(84) Etats contractants désignés:
**AT BE CH DE GB IT LI LU NL SE**

(56) Documents cités:
**FR - A - 955 160**
**FR - A - 1 004 160**
**FR - A - 1 098 135**

(73) Titulaire: **Dehais, Claude, 35, rue Godot de Mauroy,
F-75009 Paris (FR)**

(72) Inventeur: **Dehais, Claude, 35, rue Godot de Mauroy,
F-75009 Paris (FR)**

(74) Mandataire: **Picard, Jean-Claude Georges et al, Cabinet
Plasseraud 84, rue d'Amsterdam, F-75009 Paris (FR)**

EP 0 079 259 B1

BUNDESDRUCKEREI BERLIN

## Description

La présente invention concerne une machine automatique pour la fabrication d'objets allongés, notamment d'ampoules pharmaceutiques, à partir de cannes de verre, ces cannes se déplaçant parallèlement à elles-mêmes selon un parcours déterminé, une zone de chauffage étant prévue le long d'au moins une partie dudit parcours, zone dans laquelle passe successivement une portion déterminée de chacune des cannes, maintenue dans la position axiale voulue par deux mandrins de serrage adaptés en particulier, lorsqu'ils passent en un endroit déterminé dudit parcours, à s'écarter l'un de l'autre pour provoquer l'étirage de ladite portion de canne et, lorsqu'ils arrivent en fin de parcours, à être desserrés pour permettre une avance de la canne concernée sur une longueur correspondant à la longueur désirée des ampoules, et dans laquelle machine, en outre, chaque paire de mandrins associés peut être alimentée en cannes successives à partir d'un faisceau de cannes.

Dans les machines connues à l'heure actuelle (FR-A-1 098 135), la zone de chauffage précitée est obtenue à l'aide de chalumeaux à gaz dont la flamme lèche les cannes au niveau de la portion à étirer. Pour que la chaleur se répartisse uniformément sur toute la périphérie des cannes, celles-ci sont entraînées en rotation par l'intermédiaire de leurs mandrins.

Ce système de chauffage présente un certain nombre d'inconvénients.

Le plus important réside dans un mauvais rendement thermique, ce rendement, défini comme le rapport de la chaleur qu'il est nécessaire d'apporter au verre pour effectuer l'étirage d'une canne à la température et selon l'amplitude voulues, à la chaleur effectivement dépensée, étant d'environ 4 à 5% seulement, ce que est al cause d'une importante dépense énergétique, avec une surchauffe importante et inutile de l'atelier.

D'autre part, les brûleurs sont d'un réglage délicat, ce qui nécessite une main d'œuvre particulièrement qualifiée, difficile à former, et entraîne de nombreuses interventions sur les machines, ce qui en diminue la productivité.

En outre, ces machines ont un niveau sonore important, du fait du bruit engendré par les flammes des nombreux chalumeaux, et de la commande mécanique de ceux-ci, laquelle met en œuvre de nombreux organes mobiles et bruyants, tels que galets, rampes ou carnes de commande, etc. Cette dernière caractéristique, ajoutée à la chaleur, rend les conditions de travail des opérateurs particulièrement pénibles.

Le but de la présente invention est de remédier à ces inconvénients et, à cet effet, une machine du type décrit au début est, conformément à l'invention, caractérisé en ce que ladite zone de chauffage est constituée par un fourtunnel thermiquement isolé et chauffé electriquement.

Grâce à cette disposition générale de l'invention, on diminue de façon très importante les pertes thermiques, et des essais ont démontré que l'on pouvait alors obtenir un rendement thermique d'environ 20% au moins. Cela permet de réaliser des économies considérables sur le poste dépenses d'énergie.

Corrélativement, les conditions de travail sont rendues plus agréables, car il n'y a plus de surchauffe de l'atelier.

Par ailleurs, la souplesse de réglage est bien plus grande que celle que permettent d'obtenir des brûleurs à gaz, et les contraintes d'entretien sont considérablement réduites. En effet, entre autres, disparaît la servitude d'avoir à régler les proportions de gaz combustible et comburant alimentant les brûleurs.

De plus, le mode de chauffage électrique permet de mettre en œuvre une conduite entièrement automatique des machines: on peut commodément asservir la puissance de chauffe à la vitesse de rotation de la machine, étant entendu que, dans le cas général, le parcours des cannes mentionné plus haut est un parcours circulaire, la partie essentielle des machines étant constituée par un manège d'axe vertical entraîné en rotation à vitesse déterminée; on pourra de plus régler facilement la poussance de chauffe par rapport aux paramètres sensibles du verre, notamment pour réguler le diamètre de la pointe des ampoules ou la température du verre en sortie de four; on pourra encore obtenir, de façon plus certaine qu'avec un chauffage au gaz, une grande constance de qualité des produits et une productivité accrue des machines.

D'autres caractéristiques et avantages de la présente invention apparaîtront à la lecture de la description qui suit de modes d'exécution d'une machine de fabrication d'ampoules pharmaceutiques présentant les caractéristiques générales qui viennent d'être énoncées, et ceci avec référence aux figures schématiques du dessin annexé dans lequels:

— la figure 1 montre schématiquement en perspective et partiellement, certains des éléments essentiels d'une machine réalisée conformément à l'invention;
— la figure 2 est un diagramme que montre l'étendue, en direction périphérique, de la zone de chauffage f;
— la figure 3 est encore une vue schématique en perspective, montrant la constitution générale du fourtunnel de la machine;
— la figure 4 montre quelle peut être la constitution des moyens de support des résistances chauffantes;
— la figure 5 est une vue en coupe transversale du four-tunnel; et
— la figure 6 est une vue analogue à celle de la figure 1, montrant une variante.

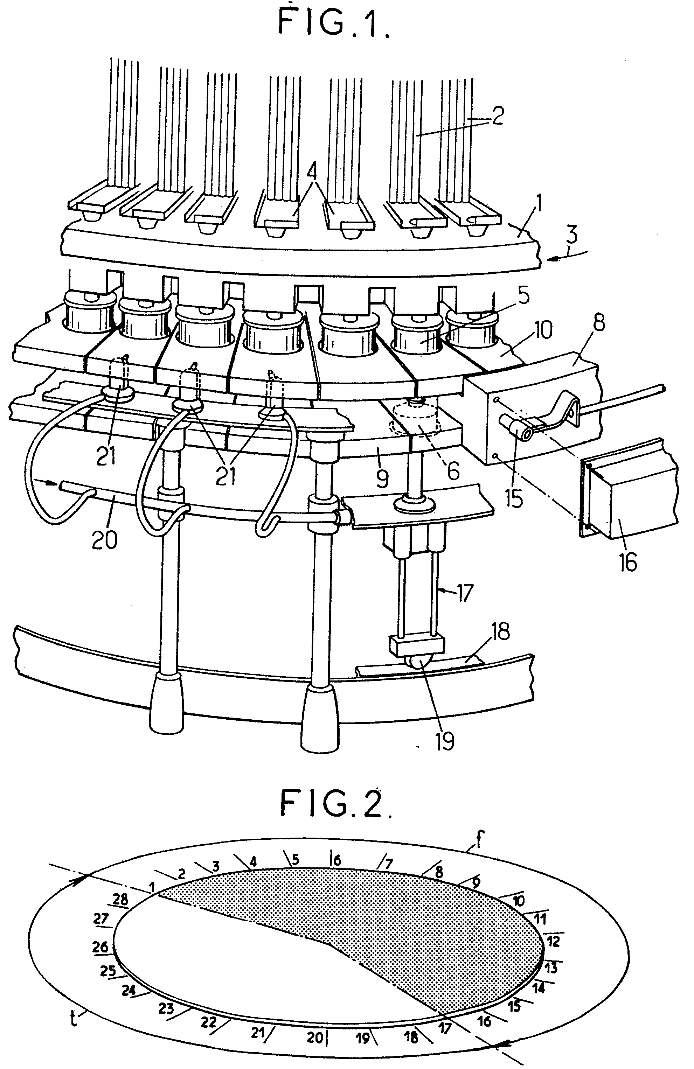

1. A la figure 1, on a référencé en 1 une base de support pour les faisceaux de cannes de verre 2, cette base faisant partie du manège de la machine, lequel tourne autour d'un axe vertical, dans le sens de la flèche 3.

En 4, on a référencé globalement, mais sans représentation des détails, les couloirs de guidage qui permettent aux cannes, une par une, d'être guidées vers les paires de mandrins 5,6 respectives, lorsque la canne précédente a été épuisée, c'est-à-dire a été entièrement transformée en ampoules.

Le processus général de fonctionnement de ce genre de machines est le suivant: l'extrémité enférieure d'une canne de chaque faisceau 2 est amenée, par le dispositif 4, en alignement avec les deux mandrins 5, 6 correpondants, qui sont alors ouverts, cette opération, comme toutes les autres phases du fonctionnement de la machine, étant commandée automatiquement à l'instant approprié. Cette alimentation s'effectue vers le milieu de la plage référencée en t sur la figure 2.

Lorsqu'une canne est en position, les mandrins correspondants se resserrent sur elle et les portions de cannes que devront être effilées pour former les pointes des ampoules pénétrent, les unes à la suite des autres, dans la zone de chauffage référencée f. Lorsqu'une canne arrive à la sortie de la zone de chauffe f pour pénétrer dans la zone t, le verre est suffisamment chaud (environ 1 550°C) pour pouvoir être étiré. A cet effet, les mandrins 5 et 6 s'écartent l'un de l'autre tout en restant serrés sur al canne. Ceci peut se faire par exemple avec un mandrin supérieur 5 fixe et un mandrin inférieur 6 se déplaçant vers le bas.

Lorsque la canne est suffisamment effilée, elle est divisée du fait de son étirement, ce que forme la pointe supérieur de l'ampoule d'extrémité, alors terminée, en même temps que la pointe inférieure de l'ampoule suivante, laquelle sere terminée au tour suivant du manège.

Les mandrins 5 et 6 se desserrent alors, pour permettre d'une part l'évacuation de l'ampoule terminée et d'autre part la descente de la canne d'une valeur correspondant à la longueur des ampoules à produire.

Le même cycle se reproduit à chaque tour.

Lorsque les cannes sont épuisées (après un nombre de tours du manège correspondant au nombre d'ampoules produites par canne), le système de distribution à couloir 4 est actionné et de nouvelles cannes sont introduites entre les mandrins. Le déroulement des opérations qui viennent d'être décrites recommence alors de la même manière.

Pour fixer les idées, une telle machine peut comporter vingt-huit postes de travail, dont dix-sept postes de chauffe, et produire quelque 10 000 ampoules à l'heure.

Dans la technique actuelle, la zone de chauffe f est produite par des brûleurs à gaz, à savoir au propane, le comburant étant de l'oxygène. Ce système de chauffe entraîne les inconvénients décrits au début, dont le plus important est le poids considérable qu'ont les dépenses d'énergie dans le prix de revient du produit.

L'invention permet de réaliser des économies très notables en remplaçant la zone f de chauffage au gaz par une zone f de chauffage électrique.

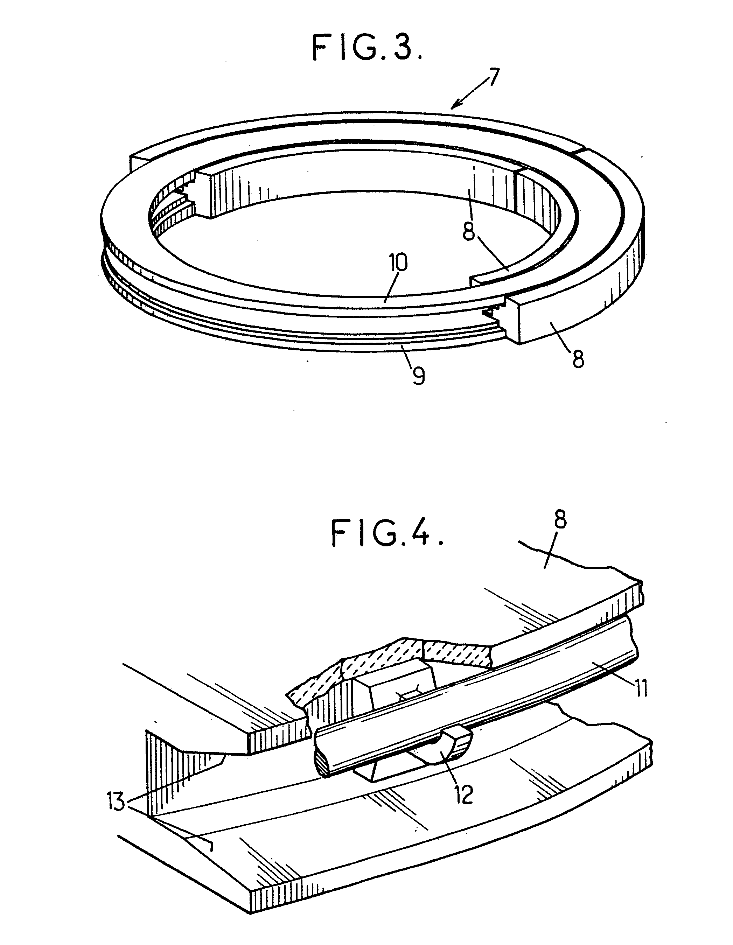

A cet effet, la zone f est occupée par un four-tunnel référencé globalement en 7 (figure 3) thermiquement isolé et chauffé électriquement.

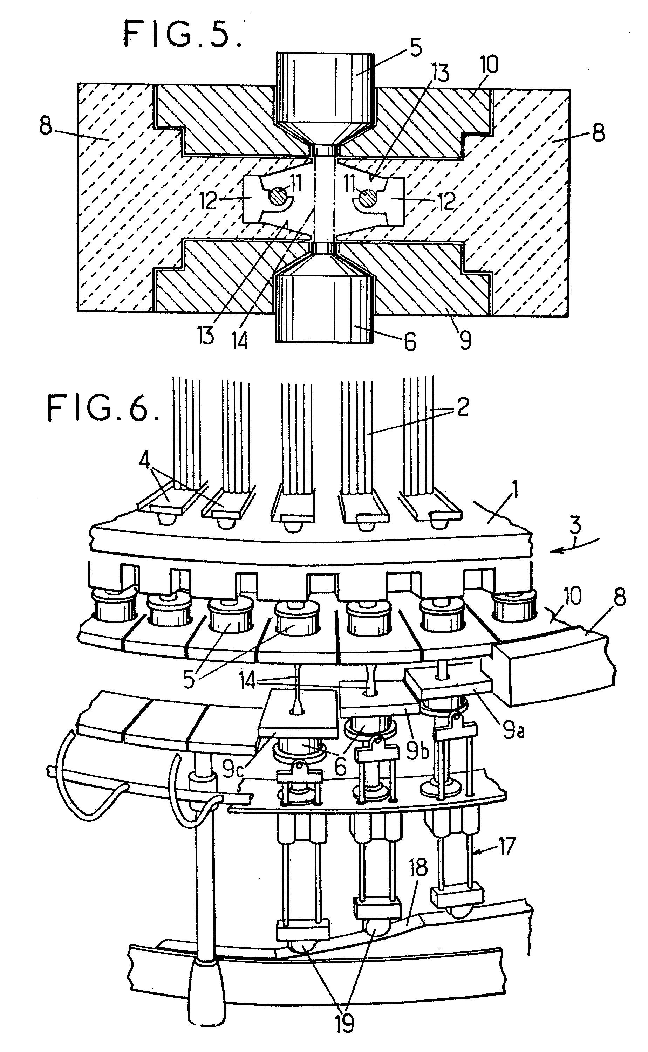

Ce four comprend deux parois verticales rayonnantes fixes 8 (figure 5), et deux parois horizontales réfractaires et isolantes, à savoir une sole 9 et une voûte 10, faisant partie du manège précité et donc entraînées soivant le parcours des cannes, en synchronisme avec les mandrins 5, 6.

Comme on le voit sur al figure 3, les deux parois isolantes rotatives 9 et 10 s'étendent sur 360°, tandis que les parois verticales rayonnantes fixes 8 s'étendent seulement suivant un arc de cercle, lequel fait environ 200° d'angle au centre, et correspond à la portion f de la figure 2.

Les éléments chauffants sont constitués par des résistances électriques 11 portées de place en place par des supports isolants 12 à l'interieur de chaque paroi 8. Comme on le voit sur la figure 5, les faces en regard de ces parois ont été usinées de sorte à présenter la forme de diffuseurs 13, ceci pour concentrer le rayonnement vers la zone de canne à chauffer, zone référencée en 14.

Sur la figure 1, on a représenté en outre une borne 15 de sortie de résistance, et, en position retirée, un capot de protection 16.

Dans le mode de réalisation de cette figure 1, la sole 9 et la voûte 10 du four-tunnel sont constituées de secteurs dont la position en hauteur est constante suivant toute la périphérie, de sorte que les mandrins inférieurs 6 doivent pouvoir traverser librement les secteurs 9 de la sole, pour se déplacer vers le bas lors de l'opération d'étirage des zones de cannes 14. On a référencé globalement en 17, pour un mandrin inférieur 6, l'équipage mobile qui permet ce d'placement du mandrin en l'emplacement voulu de son parcours périphérique. La commande peut se réaliser commodément au moyen d'un chemin de roulement convenablement profilé 18, sur lequel se déplace un galet 19 dudit équipage 17.

Pour en finir avec cette figure 1, on a référencé en 20 une conduite d'amenée de gaz et en 21 trois petits chalumeaux auxiliaires, destinés seulement à èviter un refroidessement trop rapide du verre en sortie de four.

Dans le mode de réalisation représenté à titre de variante à la figure 6, les secteurs de la voûte 10 ont encore une position en hauteur constante, mais les secteurs 9a, 9b, 9c . . . qui constituent la sole peuvent se deplacer vers le bas, en mème temps que les mandrins inférieurs 6 correspondants, lors de l'opération d'étirage. Cette opération s'effecture de même par la commande: équipages mobiles 17; chemin de roulement profile 18; galets 19. Dans ce cas, bien entendu, les mandrins inférieurs 6 peuvent être solidaires des secteurs de la sole 9 et n'ont pas besoin de pouvoir coulisser à travers des ouvertures de cette dernière comme c'est le cas avec le mode d'exécution de la figure 1.

Comme il va de soi, et comme il en résulte d'ailleurs déjà de ce qui précède, l'invention ne se limite nullement à ceux de ses modes d'application et de réalisation qui ont été plus particulièrement envisagés; elle en embrasse, au contraire, toutes les variantes.

**Revendications**

1. Machine automatique pour la fabrication d'objets allongés, notamment d'ampoules pharmaceutiques, à partir de cannes de verre (14), ces cannes se déplaçant parallèlement à elles-mêmes selon un parcours déterminé, une zone de chauffage (f) étant prévue le long d'au moins une partie dudit parcours, zone dans laquelle passe successivement une portion déterminée de chacune des cannes, maintenue dans la position axiale voulue par deux mandrins de serrage (5, 6) adaptés en particulier, lorsqu'ils passent en un endroit déterminé dudit parcours, à s'écarter l'un de l'autre pour provoquer l'étirage de ladite portion de canne et, lorsqu'ils arrivent en fin de parcours à être desserrés pour permettre une avance de la canne concernée sur une longueur correspondant à la longueur désirée des ampoules, et dans laquelle machine, en outre, chaque paire de mandrins associés (5, 6) peut être alimentée en cannes successives (14) à partir d'un faisceau de cannes (2), caractérisée en ce que ladite zone de chauffage (f) est constituée par un four-tunnel (7) thermiquement isolé et chauffé électriquement.

2. Machine selon da revendication 1, caractérisée en ce que ledit four-tunnel (7) comprend deux parois verticales rayonnantes fixes (8) et deux parois horizontales — à savoir une sole (9) et une voûte (10) — isolantes, entraîntes soivant ledit parcours des cannes, en synchronisme avec ledits mandrins (5, 6).

3. Machine selon la revendication 2, dans laquelle ledit parcours est un parcours rotatif, les cannes, mandrins et organes annexes étant montés sur un manège (1) tournant autour d'un axe vertical, caractérisée en ce que lesdites parois verticales fixes (8) dudit four-tunnel s'étendent, autour dudit manège, selon un arc de cercle (f).

4. Machine selon la revendication 3, caractérisée en ce que ledit arc de cercle (f) s'étendent sur eviron 200° d'angle au centre.

5. Machine selon l'une quelconque des revendications 2 à 4, caractérisée en ce que le four-tunnel (7) comprend, comme éléments chauffants, des résistances électriques (11) portées de place en place par des supports isolants (12) à l'interieur de chaque parois fixe (8).

6. Machine selon l'une quelconque des revendications 2 à 5, caractérisée en ce que les faces en regard des parois fixes (8) présentent la forme de diffuseurs (13) concentrant le rayonnement vers la zone centrale (14) du four-tunnel.

7. Machine selon l'une quelconque des revendications 2 à 6, caractérisée en ce que la sole (9) et la voûte (10) du four sont constituées de secteurs dont la position en hauteur est constante sur tout le pourtour du manège, les mandrins inférieurs (6) pouvant traverser librement les secteurs (9) de la sole, pour se déplacer vers le bas lors de l'opération d'étirage.

8. Machine selon l'une quelconque des revendications 2 à 6, caractérisée en ce que la sole (9) du four est constituée de secteurs (9a, 9b, 9c ...) susceptibles de se déplacer vers le bas, en même temps que les mandrins inférieurs (6) correspondants, lors de l'opération d'étirage.

**Patentansprüche**

1. Automatische Maschine zur Herstellung gezogener Gegenstände, insbesondere Arzneimittelampullen, ausgehend von Glasröhrchen (14), die sich auf einer vorbestimmten Bahn parallel zu sich selbst bewegen, wobei entlang zumindest eines Abschnittes dieser Bahn eine Heizzone (f) vorgesehen ist, welche von einem vorbestimmten Abschnitt jedes Röhrchens durchsetzt wird, das in einer vorbestimmten Axiallage durch zwei Spannfutter (5, 6) gehalten wird, die insbesondere so ausgebildet sind, daß sie sich beim Durchlaufen eines vorbestimmten Bahnabschnittes voneinander entfernen, um ein Ausziehen des betreffenden Teiles des Röhrchens zu bewirken, und, sobald sie am Ende der Bahn angelangt sind, gelöst werden, um einen Vorschub des betreffenden Röhrchens über eine Strecke zu gestatten, welche der gewünschten Ampullenlänge entspricht, und bei welcher Maschine außerdem jedes Paar von einander zugeordneten Spannfuttern (5, 6) mit aufeinanderfolgenden Röhrchen (14) aus einer Gruppe (2) von Röhrchen gespeist werden kann, dadurch gekennzeichnet, daß die Heizzone (f) durch einen Tunnelofen (7) gebildet ist, der wärmeisoliert und elektrisch beheizt ist.

2. Maschine nach Anspruch 1, dadurch gekennzeichnet, daß der Tunnelofen (7) zwei feststehende vertikale Strahlungswände (8) und zwei horizontale Isolierwände, nämlich eine Sohle (9) und eine Decke (10) aufweist, die entlang der Bewegungsbahn der Röhrchen synchron mit den Einspannfuttern (5, 6) angetrieben sind.

3. Maschine nach Anspruch 2, bei welcher die Bahn eine Umlaufbahn ist, wobei die Röhrchen, Einspannfutter und zugeordnete Organe auf einem um eine Vertikalachse drehbaren Karussell (1) angeordnet sind, dadurch gekennzeichnet, daß die feststehenden vertikalen Wände (8) des Tunnelofens (7) sich um das Karussell herum auf einem Kreisbogen (f) erstrecken.

4. Maschine nach Anspruch 3, dadurch gekennzeichnet, daß der Kreisbogen (f) sich über einen Zentriwinkel von etwa 200° erstreckt.

5. Maschine nach einem der Ansprüche 2 bis 4, dadurch gekennzeichnet, daß der Tunnelofen (7) als Heizelemente elektrische Widerstandsheizelemente (11) aufweist, die in Abständen durch Isolierträger (12) auf der Innenseite jeder feststehenden Wand (8) getragen sind.

6. Maschine nach einem der Ansprüche 2 bis 5, dadurch gekennzeichnet, daß die den feststehenden Wänden (8) gegenüberliegenden Seiten die Form von Diffusoren (13) haben, welche die Strahlung gegen die zentrale Zone (14) des Tunnelofens konzentrieren.

7. Maschine nach einem der Ansprüche 2 bis 6, dadurch gekennzeichnet, daß die Sohle (9) und die Decke (10) des Ofens durch Sektoren gebildet sind, deren Höhenlage über die gesamte Erstreckung des Karussels konstant ist, wobei die unteren Einspannfutter (6) die Sektoren (9) der Sohle frei durchsetzen können, um sich beim Ziehvorgang nach unten zu bewegen.

8. Maschine nach einem der Ansprüche 2 bis 6, dadurch gekennzeichnet, daß die Sohle (9) des Ofens durch Sektoren (9a, 9b, 9c . . .) gebildet ist, die beim Ziehvorgang gleichzeitig mit den zugeordneten unteren Einspannfuttern (6) nach unten bewegbar sind.

**Claims**

1. Automatic machine for the manufactur of drawn objects, especially pharmaceutical ampoules, from glass tubes (14), these tubes being transported in a direction parallel to their length along an predetermined path, a zone of heating (f) being provided along at least a part of the said path, into which zone a predetermined portion of each of the tubes passes successively, held in the desired axial position by two retaining chucks (5, 6) in particular adapted, when they pass to a predetermined location on the said path, to become displaced from one another to cause drawing of the said portion of the tube and, when they arrive at the end of the path, to be released so as to permit the tube concerned to advance over a length correponding to the desired length of the ampoules, and in which machine each pair of associated chucks (5, 6) can also be fed with successive tubes (14) from a bundle of tubes (2), characterised in that the said heating zone (f) is formed by a tunnel-furnace (7) which ist thermally insulated and electrically heated.

2. Machine according to claim 1, characterised in that the said tunnel-furnace (7) includes two vertical radiating fixed walls (8) and two horizontal walls, i. e. a hearth (9) and a crown (10), which are insulating, and carried along the said path of the tubes, in synchronisation with the said chucks (5, 6).

3. Machine according to claim 2, in which the said path is a rotational path, the tubes, chucks, and ancillary means being mounted on a rotatable about a vertical axis, characterised in that the said vertical fixed walls (8) of the said tunnel-furnace (7) ecxtend, around the said turntable, over an arc of a circle (f).

4. Machine according to claim 3, characterised in that the said arc of a circle (f) extends over about 200 angular degrees at the centre.

5. Machine according to any one of the claims 2 to 4, characterised that the tunnel-furnace (7) includes, as heating elements, electrical resistors (11) supported at intervals by insulating supports (12) on the inside of each fixed wall (8).

6. Machine according to any one of claims 2 to 5, characterised in that the opposite faces of the fixed walls (8) are in the form of diffusers (13) which concentrate the radiation towards the central zone (14) of the tunnel-furnace.

7. Machine according to any one of claims 2 to 6, characterised in that the hearth (9) and the crown (10) of the furnace are formed by sections of which the vertical position ist constant over the whole circumference of the turntable, the lower chucks (6), being capable of freely passing through the sections (9) of the hearth, for downward displacement during the drawing operation.

8. Machine according to any of claims 2 to 6, characterised in that the hearth (9) of the furnace is composed of sections (9a, 9b, 9c . . .) capable of being displaced downwardly, at the same time as the corresponding lower checks (6), during the drawing operation.

# FIG.1.

# FIG.2.

# FIG.3.

# FIG.4.

## FIG.5.

## FIG.6.